# EUROPEAN PATENT APPLICATION

(11) **EP 2 022 599 A1**
(43) Date of publication of application: **11.02.2009**
(21) Application number: 08161593.2
(22) Date of filing: 31.07.2008
(51) Int. Cl.: B23K 35/30, C22C 19/07, C22F 1/10, B23P 6/00, F01D 5/00

(54) **Braze alloy composition with enhanced oxidation resistance and methods of using the same**

(30) Priority: 07.08.2007 US 835031
(71) Applicant: GENERAL ELECTRIC COMPANY, Schenectady, NY 12345 (US)
(72) Inventor: Sathian, Sujith, Simpsonville, SC 29681 (US); Murphy, Gene Arthur, Pelzer, SC 29669 (US)
(74) Representative: Szary, Anne Catherine

(57) **Abstract**

A cobalt-based braze alloy composition comprises: 22 to 24.75% chromium by weight; 9 to 11 % nickel by weight; 6.5 to 7.6% tungsten by weight; 3 to 4% tantalum by weight; 0.55 to 0.65% carbon by weight; 0.3 to 0.6% zirconium by weight; 0.15 to 0.3% titanium by weight; 1.5 to 2.6% boron by weight; 1 to 10% silicon by weight; and cobalt.

## Description

### BACKGROUND OF THE INVENTION

The present invention generally relates to a braze alloy composition that may have enhanced oxidation resistance at elevated temperature.

Components in a high-temperature or extreme environment, such as a hot-gas-path airfoil in a gas turbine, may experience degradation or may have issues relating to durability. One method of repairing such superalloys may involve pre-sintered performs based upon braze alloys and/or superalloy metallic powders.

The present invention relates to a braze alloy that may be mixed with superalloy metallic powders to form pre-sintered preforms (PSPs). PSPs may be used in a variety of salvage and/or repair applications, such as those involving the repair and/or reconstruction of components incorporated into high-temperature applications.

Braze powders are generally known in the art. One braze powder is Mar M 509B. Mar M 509B is a cobalt-based braze alloy with a boron additive.

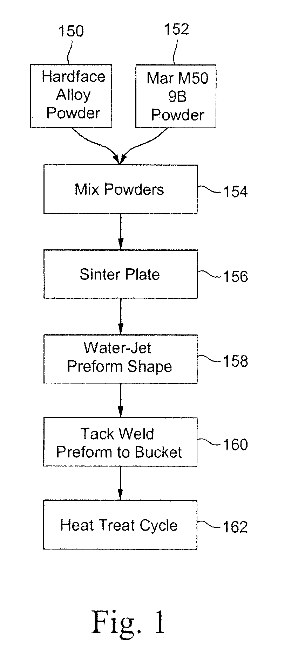

The formulation of a PSP plate using Mar M 509B braze alloy is shown in Figure 1. As illustrated, hardface alloy powder (block 150) and Mar M 905B (block 152) are mixed (block 154), then sintered (block 156) and shaped using a water-jet (block 158). After shaping, the preform is tack welded (block 160), e.g., to a bucket, and subjected to a cycle of heat treatment (block 162). A PSP comprising Mar M 509B braze powder may contain approximately 50% Co, 10% Ni, 24% Cr, 4% Ta, 0.25% Ti, 8% W, 0.5% C, and 2.7% B by weight. In certain embodiments, the present invention relates to braze powders having a greater weight percentage of silicon and boron. The silicon content in certain embodiments of the inventive composition may provide advantageous oxidation resistance. The elevated concentrations of silicon and boron content may facilitate the lowering of the melting point for the composition. The boron content in certain embodiments of the inventive composition may facilitate bonding between a PSP and superalloy hardware during brazing operation.

In certain embodiments of the present invention, a process using a particular braze alloy composition may be easy to apply and may require minimal surface preparation before brazing and minimal machining after the hardface operation.

In certain embodiments, PSPs using this braze alloy may be made to near-net shape and brazed on to the bucket. This may provide robustness, repeatability and reproducibility while perhaps reducing the extent of post-hardface machining.

### brief description of the invention

In an embodiment, there is a cobalt-based braze alloy composition comprising: 22 to 24.75% chromium by weight; 9 to 11 % nickel by weight; 6.5 to 7.6% tungsten by weight; 3 to 4% tantalum by weight; 0.55 to 0.65% carbon by weight; 0.3 to 0.6% zirconium by weight; 0.15 to 0.3% titanium by weight; 1.5 to 2.6% boron by weight; 1 to 10% silicon by weight; and cobalt.

In another embodiment, there is a method of repair or reconstructing a superalloy component comprising the steps of: forming a presintered preform by mixing a hardface alloy powder with a cobalt-based braze alloy comprising 22 to 24.75% chromium by weight, 9 to 11 % nickel by weight, 6.5 to 7.6% tungsten by weight, 3 to 4% tantalum by weight, 0.55 to 0.65% carbon by weight, 0.3 to 0.6% zirconium by weight, 0.15 to 0.3% titanium by weight, 1.5 to 2.6% boron by weight, 1 to 10% silicon by weight, and cobalt; sintering the presintered preform to make a sintered component; shaping the sintered component; welding the sintered component to the superalloy component to form a combination; and subjecting the combination to a heat treatment cycle. The presintered preform comprises 60-90% hardface alloy powder by weight and 10-40% cobalt-based braze alloy composition by weight.

### brief description of the drawings

FIGURE 1 is a flowchart illustrating process steps involved in making and using a presintered preform.
FIGURE 2 shows an example of hot gas path side bucket angel wing repaired using a PSP in accordance with an embodiment of the present invention.
FIGURE 3 illustrates a hot gas path bucket tip that was repaired using a PSP in accordance with an embodiment of the present invention.

### detailed description of the invention

The present invention generally relates to a braze alloy composition that may have enhanced oxidation resistance at elevated temperature.

In certain embodiments, there is a braze alloy composition having an enhanced resistance to oxidation at elevated temperature. As an exemplary starting point, commercially available Mar M 509B braze powder may be used as a baseline composition for the development of a braze alloy in accordance with an embodiment of this invention. If compared with Mar M 509B, there may be an additional (e.g., 5%) silicon and additional (e.g., 2%) boron content. The silicon content in certain embodiments of the inventive composition may provide advantageous oxidation resistance. The elevated concentrations of silicon and boron content may facilitate the lowering of the melting point for the composition. The boron content in certain embodiments of the inventive composition may facilitate bonding between a pre-sintered preform (PSP)and superalloy hardware during brazing operation.

In an embodiment, the braze alloy may be mixed with superalloy metallic powders to form a PSP. A PSP may be used, for example, in salvaging and/or repairing hot-gap-path components, such as those found in gas turbines. A good bond between the PSP and superalloy hardware may be obtained with a heat-treatment cycle when using a braze alloy in accordance with an embodiment of the present invention.

In an embodiment, a PSP may also contain Tribaloy T800 in powdered form. T800 is a cobalt-based hardface alloy produced by Deloro Stellite Inc., Belleville, Ontario, Canada. A suitable PSP may be available from Morgan Advanced Ceramics (Wesgo Metals Division), 2425 Whipple Road, Hayward, CA 94644. T800 has the following constituents by their approximate weight percentage:

**Table 1: Composition of T800**

| Component | Weight Percentage |
|---|---|
| Co | Balance |
| Mo | 27.00 - 30.00 |
| Cr | 16.50 - 18.50 |
| Si | 3.00 - 3.80 |
| Fe | 1.50 (maximum) |
| Ni | 1.50 (maximum) |
| O | 0.15 (maximum) |
| C | 0.08 (maximum) |
| P | 0.03 (maximum) |
| S | 0.03 (maximum) |

In certain embodiments, PSPs that can be used for superalloy applications may include 60-90% (and all subranges therebetween) T800 or CM 64 powder by weight and 40-10% (and all subranges therebetween) of a braze alloy composition by weight (as described herein). Coast Metal (CM) 64 powder may be available from Morgan Advanced Ceramics (Wesgo Metals Division). CM 64 has the following constituents by their approximate weight percentage:

**Table 2: Composition of CM 64**

| Component | Weight Percentage |
|---|---|
| Co | Balance |
| Cr | 26-30 |
| W | 18-21 |
| Ni | 4-6 |
| C | 0.7-1.0 |
| V | 0.75-1.25 |
| Fe | 3 (maximum) |
| Si | 1 (maximum) |
| Mn | 1 (maximum) |
| B | 0.05 (maximum) |
| Mo | 0.5 (maximum) |

Commercially available brazing material Mar M 509B in powdered form may be used. M 509B is a cobalt-based braze alloy with a boron additive and has the following constituents by their approximate weight percentage:

**Table 3: Composition of Mar M 509B**

| Component | Weight Percentage |
|---|---|
| Co | Balance |
| Cr | 22.00 - 24.75 |
| Ni | 9.00 - 11.00 |
| W | 6.50 - 7.60 |
| Ta | 3.00 - 4.00 |
| B | 2.60 - 3.16 |
| C | 0.55 - 0.65 |
| Zr | 0.30 - 0.60 |
| Ti | 0.15 - 0.30 |
| Fe | 1.30 (maximum) |
| Si | 0.40 (maximum) |
| Mn | 0.10 (maximum) |
| S | 0.02 (maximum) |

In exemplary embodiments, there is a braze alloy composition with enhanced oxidation resistance at elevated temperature. In exemplary embodiments, the alloy contains approximately 5% silicon and 2.5% boron content with similar chemical composition as Mar M 509B with an approximately 5% lower cobalt content. In accordance with other exemplary embodiments, the silicon weight percentage may vary from 1 to 10%, and all subranges therebetwen, from 2.5 to 7.5%, and all subranges therebetween, or from 4 to 6%, and all subranges therebetween. And in accordance with exemplary embodiments, the boron weight percentage may vary from 1.5 to 2.6%, and all subranges therebetween, or from 2 to 2.6%, or from 2.45 to 2.55%, and all subranges therebetween.

In certain embodiments, silicon in this super-alloy may enhance oxidation resistance. The presence of both silicon and boron may be effective in lowering the melting point to obtain good bond between the PSP and superalloy hardware. In an embodiment, the braze alloy may be a cobalt-based braze alloy with less boron additive and higher additives of silicon by their approximate weight percentage (all stated ranges include all subranges therebetween):

**Table 4: Composition of exemplary embodiments of the present invention**

| Component | Weight Percentage |
|---|---|
| Co | Balance |
| Cr | 22.00 - 24.75 |
| Ni | 9.00 - 11.00 |
| W | 6.50 - 7.60 |
| Ta | 3.00 - 4.00 |
| B | 1.50 - 2.60 |
| C | 0.55 - 0.65 |
| Zr | 0.30 - 0.60 |
| Ti | 0.15 - 0.30 |
| Fe | 1.30 (maximum) |
| Si | 1.00-10.00 |
| Mn | 0.10 (maximum) |
| S | 0.02 (maximum) |

The formulation of a PSP plate using a braze alloy includes mixing a hardface alloy powder (such as T800) and a composition made in accordance with an exemplary embodiment. This mixture is then sintered and shaped, such as with a water-jet. After shaping, the preform is tack welded to a component potentially in need of repair and subjected to a cycle of heat treatment.

In an embodiment, the following heat-treatment cycle may be used on hot-gas-path components using a PSP containing a braze alloy. Heat-treatment may include a heating cycle sub-step and a cooling cycle sub-step. The heating cycle sub-step may include placing a superalloy part with preform into a brazing furnace that is at room temperature, e.g., approximately 21 °C (70°F). To facilitate the bonding process, a non-oxidizing atmosphere within the furnace and a method of inducing a pressure on hardface preform may be provided in accordance with methods well-known to practitioners in the art. The furnace used may be a vacuum furnace, and a minimum vacuum requirement can be 0.5 x 10-3 Torr.

The furnace may be heated to approximately 650°C (1200°F) at a rate of approximately 14°C/minute (25°F/minute). Once approximately 650°C (1200°F) is attained, this temperature may be maintained for approximately 30 minutes. Then the furnace temperature may be increased to approximately 980°C (1800°F) at a rate of approximately 14°C/minute (25°F/minute). Once approximately 980°C (1800°F) is attained, this temperature may be maintained for approximately 30 minutes. Then the furnace temperature is increased to approximately 1204 to 1218°C (2200 to 2225°F) at a rate of approximately 19°C/minute (35°F/minute). Once approximately 1204 to 1218°C (2200 to 2225°F) is attained, this temperature may be maintained for approximately 20 minutes. The furnace may then be cooled to a temperature of about 1120°C (2050°F) for about sixty minutes, then further cooled to 815°C (1500°F). The furnace may be subsequently cooled to approximately room temperature at any temperature.

The table below summarizes test results for an oxidation test conducted at 2000°F for 500 hours for PSPs made with T800 and either Mar M 509B or a braze alloy made in accordance with an embodiment of the present invention. The oxidation test was conducted in an air furnace. The samples were first placed in the air furnace at 2000oF for 500 hrs (∼21 days). After 500 hrs, the samples were taken out from the furnace and cooled in air. Metallography analysis was conducted to check the oxidation resistance; samples were sectioned, polished, and etched to check for the oxidation layer thickness. These test results show enhanced oxidation resistance.

**Table 5: Comparison of oxidation resistance of T800 PSP (PSPs made with 15% Mar M 509B braze alloy vs. with 15 % of braze alloy in accordance with an exemplary embodiment)**

| PSP (Braze Alloy) | Composition | Hardness (Rc) | Oxidation Depth @ 2000°F/500hr | Braze Temperature (20 min), Range |
|---|---|---|---|---|
| Mar M 509B (2.6% B) | 85/15 | 51-59 | ∼3 mils | 2175-2225°F (2200°F) |
| Embodiment of Braze Alloy (2%B ; 5%Si) | 85/15 | 53-56 | ∼2.5 mils | 2175-2225°F (2200°F) |
| Weld Metal | 100 | 55-62 | ∼5 mils | NA |

In exemplary embodiments, the use of this braze alloy in PSPs may be made to near-net shape and brazed on to the bucket, thus providing robustness, repeatability and reproducibility while reducing the extent of post-hardface machining. Further, preform brazing operation may be coupled with the typical coating heat treatments in order to reduce the present manufacturing schedule.

In exemplary embodiments, the present invention may be useful in repairing and/or reconstructing components in a gas turbine, such as, for example, those illustrated in U.S. Patent Nos. 6,506,016 and 6,890,150, which are incorporated herein by reference.

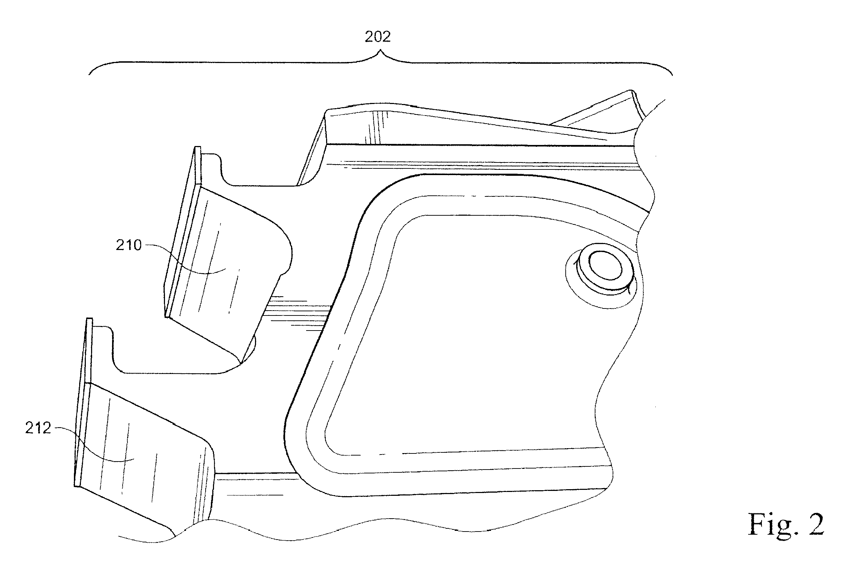

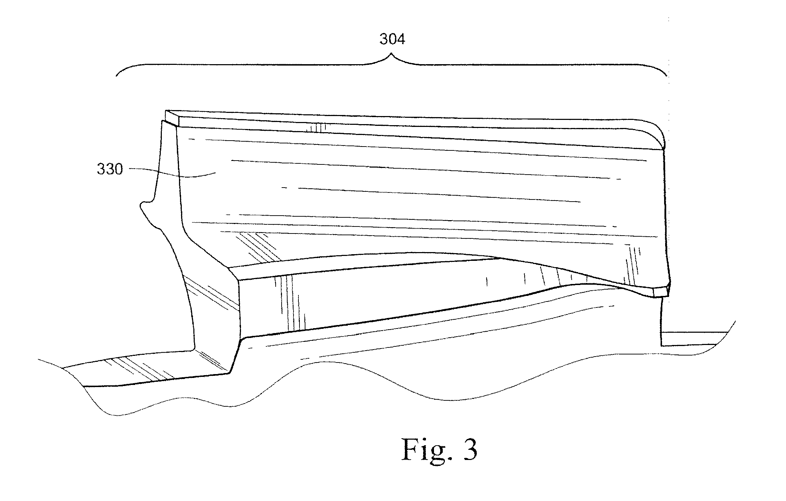

For example, Figure 2 shows an example of hot gas path side bucket angel wing repaired using a PSP in accordance with an embodiment of the present invention. In Figure 2, a shank 202 (at or near the base of a bucket, not shown) with axially projecting angel wing seals 210 and 212 is shown. The angel wing seals have been repaired in accordance with an embodiment of the present invention. Similarly, Figure 3 illustrates a hot gas path bucket tip that was repaired using a PSP in accordance with an embodiment of the present invention. In Figure 3, bucket tip 304 contains a cutter tooth 330 that has been repaired. This new developed braze alloy can be used for making PSPs or used for making and/or repairing/servicing buckets. The application, therefore, may be wide and across many product lines.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

Furthermore, all numbers and numerical ranges described and claimed herein are approximate and include some degree of variation, regardless of whether expressly designated.

## Claims

1. A cobalt-based braze alloy composition comprising:
22 to 24.75% chromium by weight;
9 to 11 % nickel by weight;
6.5 to 7.6% tungsten by weight;
3 to 4% tantalum by weight;
0.55 to 0.65% carbon by weight;
0.3 to 0.6% zirconium by weight;
0.15 to 0.3% titanium by weight;
1.5 to 2.6% boron by weight;
1 to 10% silicon by weight; and
cobalt.

2. The cobalt-based braze alloy composition of claim 1 further comprising:
up to 1.3% iron by weight;
up to 0.10% manganese by weight; and
up to 0.02% sulfur by weight.

3. The cobalt-based braze alloy composition of claim 1 or claim 2 further comprising:
2 to 2.6% boron by weight; and
2.5 to 7.5% silicon by weight.

4. The cobalt-based braze alloy composition of any preceding claim further comprising:
2.45 to 2.55% boron by weight; and
4 to 6% silicon by weight.

5. The cobalt-based braze alloy composition of any preceding claim consisting of:
22 to 24.75% chromium by weight;
9 to 11 % nickel by weight;
6.5 to 7.6% tungsten by weight;
3 to 4% tantalum by weight;
0.55 to 0.65% carbon by weight;
0.3 to 0.6% zirconium by weight;
0.15 to 0.3% titanium by weight;
1.5 to 2.6% boron by weight;
1 to 10% silicon by weight;
up to 1.3% iron by weight;
up to 0.10% manganese by weight; and
up to 0.02% sulfur by weight; and
cobalt.

6. A method of repairing or reconstructing a superalloy component comprising the steps of:
forming a presintered preform by mixing a hardface alloy powder with a cobalt-based braze alloy composition comprising 22 to 24.75% chromium by weight, 9 to 11% nickel by weight, 6.5 to 7.6% tungsten by weight, 3 to 4% tantalum by weight, 0.55 to 0.65% carbon by weight, 0.3 to 0.6% zirconium by weight, 0.15 to 0.3% titanium by weight, 1.5 to 2.6% boron by weight, 1 to 10% silicon by weight, and cobalt; wherein the presintered preform comprises 60-90% hardface alloy powder by weight and 10-40% cobalt-based braze alloy composition by weight;
sintering the presintered preform to make a sintered component;
shaping the sintered component;
welding the sintered component to the superalloy component to form a combination; and
subjecting the combination to a heat treatment cycle.

7. The method of claim 6, wherein the heat treatment cycle comprises a heating cycle sub-step and a cooling cycle sub-step.

8. The method of claim 6 or claim 7, wherein the superalloy component comprises a component of a gas turbine.

9. The method of claim 6 or claim 7, wherein the superalloy component is a bucket angel wing or a bucket tip.

10. The method of claim 6 or claim 7, wherein the heat treatment cycle comprises the steps of: heating a furnace to 650°C at a rate of 14°C/minute; maintaining a temperature of 650°C for 30 minutes; heating the furnace to 980°C at a rate of 14°C/minute; maintaining a temperature of 980°C for 30 minutes; heating the furnace to 1204 to 1218°C at a rate of 19°C/minute; maintaining a temperature of 1204 to 1218°C for 20 minutes; cooling the furnace to a temperature of 1120°C; maintaining a temperature of 1120°C for 30 minutes; and cooling the furnace to a temperature of 815°C.

11. The method of any one of claims 6 to 10 wherein the cobalt braze alloy composition is as defined in any one of claims 2 to 5.
